# EUROPEAN PATENT APPLICATION

(11) **EP 4 175 025 A1**
(43) Date of publication of application: **03.05.2023**
(21) Application number: 22763501.8
(22) Date of filing: 16.02.2022
(51) Int. Cl.: H01M 10/658, H01M 10/6554, H01M 10/613, H01M 50/204, H01M 50/211, H01M 10/647

(54) **BATTERY PACK AND DEVICE INCLUDING SAME**

(30) Priority: 05.03.2021 KR 20210029160
(71) Applicant: LG Energy Solution, Ltd., Seoul 07335 (KR)
(72) Inventor: JANG, Byung Do, Daejeon 34122 (KR); LEE, Hyoungsuk, Daejeon 34122 (KR); KIM, Donghyun, Daejeon 34122 (KR); SHIN, Juhwan, Daejeon 34122 (KR); CHUN, Yongho, Daejeon 34122 (KR)
(74) Representative: Plasseraud IP
(86) International application number: PCT/KR2022/002307
(87) International publication number: WO 2022/186517

(57) **Abstract**

A battery pack according to an embodiment of the present invention includes: a pack frame in which a plurality of battery modules are installed to be spaced apart from each other; and a pair of a cooling member and a heat insulating member positioned under the battery module, wherein the heat insulating member is positioned between the cooling member and a bottom surface of the pack frame, and pairs of cooling members and heat insulating members respectively positioned under battery modules adjacent to each other among the plurality of battery modules are spaced apart from each other.

## Description

### [Technical Field]

### Cross-reference to related application(s)

This application claims priority to and the benefit of Korean Patent Application No. 10-2021-0029160 filed in the Korean Intellectual Property Office on 3/5/2021, the entire contents of which are incorporated herein by reference.

The present invention relates to a battery pack and a device including the same, and more specifically, to a battery pack and a device including the same that may minimize heat propagation between adjacent battery modules.

### [Background Art]

Rechargeable batteries having high application characteristics and electrical characteristics such as high energy density according to their products are widely applied to battery vehicles, hybrid vehicles, and electric power storage devices driven by electric driving sources, as well as portable devices. These rechargeable batteries are attracting attention as new energy sources for improving environmental friendliness and energy efficiency in that they do not generate any by-products of energy use, as well as their primary merit, that they can drastically reduce the use of fossil fuels.

Currently commercialized rechargeable batteries include a nickel cadmium battery, a nickel hydrogen battery, a nickel zinc battery, a lithium rechargeable battery, and the like, and among them, the lithium rechargeable battery has come into the spotlight because it has advantages, for example, hardly exhibiting memory effects compared to nickel-based rechargeable batteries and thus being freely charged and discharged, and having a very low self-discharge rate and high energy density.

Generally, the lithium rechargeable battery may be classified into a cylindrical or prismatic type of rechargeable battery in which the electrode assembly is embedded in a metal can, and a pouch type of rechargeable battery in which the electrode assembly is embedded in a pouch of an aluminum laminate sheet, depending on a shape of the exterior material.

Recently, as needs for a large-capacity rechargeable battery structure along with use of the rechargeable battery as an energy storage source are increasing, there is an increasing demand for a battery pack having a medium and large module structure in which a battery module in which a plurality of rechargeable batteries are connected in series or parallel is assembled in plural. In such a battery module, a plurality of battery cells are connected in series or parallel to each other to form a battery cell stack, thereby improving capacity and output. In addition, a plurality of battery modules may be installed together with various control and protection systems, such as a battery management system (BMS) and a cooling system, to form a battery pack.

Particularly, since the battery pack has a structure in which the plurality of battery modules are combined, safety and operational efficiency of the battery pack may be problematic when some battery modules receive an overvoltage, an overcurrent, or are overheated. Particularly, in a situation in which battery pack capacity is gradually increased to improve mileage, and thus energy inside the pack is also increased, it is necessary to design a structure to satisfy a strengthened safety standard and secure safety of a vehicle and a driver. For this purpose, in particular, the need for a structure that may prevent internal thermal runaway in advance and may minimize damage even if it occurs is emerging.

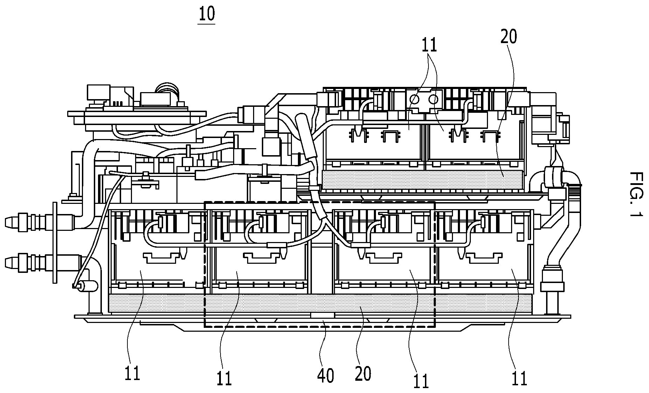

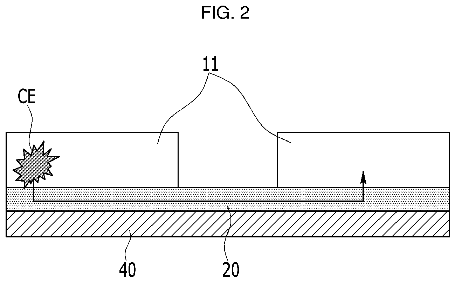

FIG. 1 illustrates a cross-sectional view of a conventional battery pack. FIG. 2 schematically illustrates a dotted line region of FIG. 1.

Referring to FIG. 1, in a conventional battery pack 10, a plurality of battery modules 11 are installed in a pack housing 40, and the plurality of battery modules 11 are installed in the cooling plate 20 positioned in the pack housing 40. More specifically, referring to FIG. 2, the battery modules 11 adjacent to each other are installed in the pack housing 40, and may be positioned together on a cooling plate 20 attached to a lower portion of the pack housing 40.

Here, referring to FIG. 1 and FIG. 2, an abnormal phenomenon CE such as overvoltage, overcurrent, or overheating may occur in some of the battery modules 11 adjacent to each other. In this case, in the conventional battery pack 10, heat of the battery module 11 in which the abnormal phenomenon CE has occurred may be transmitted to the cooling plate 20, so that heat propagation to other battery modules 11 may occur. Particularly, in general, the cooling plate 20 is made of aluminum (Al) having high thermal conductivity for cooling performance, so that heat propagation by the cooling plate 20 more quickly occurs. Due to this, thermal runaway may occur even for other battery modules 11 in which the abnormal phenomenon CE has not occurred, and a chain thermal runaway may also occur for other battery modules 11 positioned on the same cooling plate 40.

Accordingly, unlike the conventional battery pack 10, it is necessary to develop a battery pack and a device including the same that may prevent heat propagation between adjacent battery modules 11 to prevent a chain thermal runaway from occurring.

The above information disclosed in this Background section is only for enhancement of understanding of the background of the invention, and therefore it may contain information that does not form the prior art that is already known in this country to a person of ordinary skill in the art.

### [Disclosure]

### [Technical Problem]

The technical problem to be solved by the present invention relates to a battery pack and a device including the same that may minimize heat propagation between adjacent battery modules.

The technical problems to be solved of the present invention are not limited to the above-described problem, and problems not mentioned will be clearly understood by a person of ordinary skill in the art from the present specification and the accompanying drawings.

### [Technical Solution]

A battery pack according to an embodiment of the present invention includes: a pack frame in which a plurality of battery modules are installed to be spaced apart from each other; and a pair of a cooling member and a heat insulating member positioned under the battery module, wherein the heat insulating member is positioned between the cooling member and a bottom surface of the pack frame, and pairs of cooling members and heat insulating members respectively positioned under battery modules adjacent to each other among the plurality of battery modules are spaced apart from each other.

The pair of a cooling member and a heat insulating member positioned under one of the plurality of battery modules and the pair of a cooling member and a heat insulating member positioned under the other thereof are spaced apart from each other.

The pair of a cooling member and a heat insulating member may extend along a lower surface of the battery module.

The pair of a cooling member and a heat insulating member may have a different size from that of a lower surface of the battery module, and may have a larger size than that of the lower surface of the battery module.

The pair of a cooling member and a heat insulating member may have the same size as the lower surface of the battery module.

The heat insulating member may have a different size from that of the cooling member, and may have a larger size than that of the cooling member.

The heat insulating member may have the same size as the cooling member.

The cooling member may be made of aluminum (Al).

The heat insulating member may be made of an expanded polypropylene (EPP) foam.

The battery module may include a battery cell stack in which a plurality of battery cells are stacked and a module frame that accommodates the battery cell stack.

The pair of a cooling member and a heat insulating member may be positioned under the module frame.

A device according to another embodiment of the present invention includes the battery pack described above.

### [Advantageous Effects]

According to the embodiments, the present invention relates to a battery pack and a device including the same, wherein a cooling plate and a heat insulating material are positioned under each of battery modules to minimize heat propagation between adjacent battery modules.

The effects of the object of the present invention are not limited to the above-described effects, and effects not mentioned will be clearly understood by a person of ordinary skill in the art from the present specification and the accompanying drawings.

### [Description of the Drawings]

FIG. 1 illustrates a cross-sectional view of a conventional battery pack.
FIG. 2 schematically illustrates a dotted line region of FIG. 1.
FIG. 3 illustrates an exploded perspective view of a battery pack according to an embodiment of the present invention.
FIG. 4 illustrates a top view of the battery pack of FIG. 3.
FIG. 5 illustrates a perspective view of a battery module included in the battery pack of FIG. 3.
FIG. 6 illustrates an exploded perspective view of the battery module of FIG. 5.
FIG. 7 illustrates a schematic cross-section view taken along line A-A' of FIG. 4.

### [Mode for Invention]

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

In order to clearly describe the present invention, parts or portions that are irrelevant to the description are omitted, and identical or similar constituent elements throughout the specification are denoted by the same reference numerals.

Further, in the drawings, the size and thickness of each element are arbitrarily illustrated for ease of description, and the present disclosure is not necessarily limited to those illustrated in the drawings. In the drawings, the thicknesses of layers, films, panels, regions, areas, etc., are exaggerated for clarity. In the drawings, for ease of description, the thicknesses of some layers and areas are exaggerated.

In addition, throughout the specification, unless explicitly described to the contrary, the word "comprise" and variations such as "comprises" or "comprising" will be understood to imply the inclusion of stated elements but not the exclusion of any other elements.

Further, throughout the specification, the phrase "in a plan view" or "on a plane" means viewing a target portion from the top, and the phrase "in a cross-sectional view" or "on a cross-section" means viewing a cross-section formed by vertically cutting a target portion from the side.

Hereinafter, a battery pack according to an embodiment of the present invention will be described.

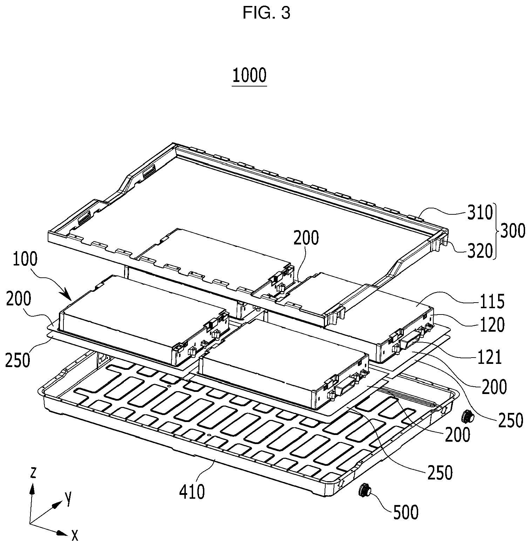

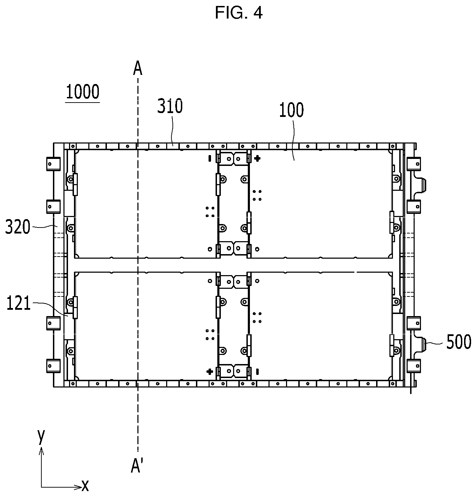

FIG. 3 illustrates an exploded perspective view of a battery pack according to an embodiment of the present invention. FIG. 4 illustrates a top view of the battery pack of FIG. 3.

Referring to FIG. 3 and FIG. 4, the battery pack 1000 according to the present embodiment includes a pack frame 410 in which a plurality of battery modules 100 are installed to be spaced apart from each other; and a pair of a cooling member 200 and a heat insulating member 250 positioned under the battery module 100.

The pack frame 410 may be a lower housing in which a plurality of battery modules 100 are installed, and may further include an upper cover (not shown) coupled to the pack frame 410 to cover an upper portion of the battery module 100. However, in the following description, the upper cover (not shown) is omitted for convenience of description, but the battery pack 1000 of the present embodiment may be described assuming that it is coupled to an upper cover (not shown) that may be generally used.

The pack frame 410 may be configured to include a bottom surface on which the plurality of battery modules 100 are disposed, and sidewalls extending upward from an edge of the bottom surface. An upper cover (not shown) covering an upper portion of the battery module 100 may be coupled to the pack frame 410 to protect an internal electrical component. In this case, various control and protection systems such as a battery management system (BMS) and a cooling system may be installed inside the pack frame 410 together with the battery module 100.

For example, the pack frame 410 may be made of a steel or aluminum material. More preferably, the pack frame 410 is made of a steel material having relatively low thermal conductivity compared to an aluminum material, so that a level at which thermal energy is transmitted between adjacent battery modules 100 through the pack frame 410 may be reduced. However, the present invention is not limited thereto, and any material having sufficient rigidity is applicable to the pack frame 410.

The pair of a cooling member 200 and a heat insulating member 250 may be positioned under the battery module 100. More specifically, in a plurality of battery modules 100, the pair of a cooling member 200 and a heat insulating member 250 may be positioned under each battery module 100. That is, in the battery pack 1000 according to the present embodiment, the pair of a cooling member 200 and a heat insulating member 250 may be respectively disposed under the battery module 100 installed in the pack frame 410. That is, as in the conventional battery pack 10 (FIG. 1), a plurality of battery modules 100 are not disposed on the same pair of a cooling member 200 and a heat insulating member 250, but each battery module 100 may be individually or independently disposed on the pair of a cooling member 200 and a heat insulating member 250.

In addition, the pair of a cooling member 200 and a heat insulating member 250 respectively positioned under the battery modules 100 adjacent to each other among the plurality of battery modules 100 may be spaced apart from each other. In other words, a pair of a cooling member 200 and a heat insulating member 250 disposed under one battery module 100 may be spaced apart from a pair of a cooling member 200 and a heat insulating member 250 disposed under another battery module 100 adjacent to the one battery module 100.

Accordingly, unlike the conventional battery pack 10 (FIG. 1), respective battery modules 100 are positioned on the cooling members 200 that are spaced apart from each other, so that heat due to the abnormal phenomenon CE such as overvoltage, overcurrent, or overheating generated in some battery modules 100 may not be directly transmitted to other adjacent battery modules 100.

In the pair of a cooling member 200 and a heat insulating member 250, the heat insulating member 250 may be positioned between the cooling member 200 and the bottom surface of the pack frame 410. More specifically, in the pair of a cooling member 200 and a heat insulating member 250, the cooling member 200 may be in contact with a lower surface of the battery module 100, and the heat insulating member 250 may be in contact with the bottom surface of the pack frame 410. In other words, the present embodiment may have a structure in which the pack frame 410, the heat insulating member 250, the cooling member 200, and the battery module 100 are sequentially stacked.

The pair of a cooling member 200 and a heat insulating member 250 may extend along the lower surface of the battery module 100. More specifically, in the pair of a cooling member 200 and a heat insulating member 250, the cooling member 200 may extend along the lower surface of the battery module 100, and the heat insulating member 250 may extend along the lower surface of the cooling member 200.

For example, the pair of a cooling member 200 and a heat insulating member 250 may have a different size from that of the lower surface of the battery module 100, and may have a larger size than the lower surface of the battery module 100. As another example, the pair of a cooling member 200 and a heat insulating member 250 may have the same size as the lower surface of the battery module 100. Accordingly, a contact area of the cooling member 200 with respect to the lower surface of the battery module 100 may be sufficiently secured, so that cooling performance of the cooling member 200 with respect to the battery module 100 may be effective.

For example, the heat insulating member 250 may have a different size from that of the cooling member 200, and may have a larger size than the cooling member 200. As another example, the heat insulating member 250 may have the same size as the cooling member 200. Accordingly, a contact area of the heat insulating member 250 with respect to the cooling member 200 is sufficiently secured, so that heat transmitted from the cooling member 200 to the pack frame 410 may be effectively blocked.

For example, the cooling member 200 may be made of aluminum (Al). However, the present invention is not limited thereto, and any material including a material having cooling performance capable of sufficiently cooling the heat generated in the battery module 100 is applicable.

For example, the heat insulating member 250 may be made of a foaming material such as an expanded polypropylene (EPP) foam. However, the heat insulating member 250 is not limited thereto, and any material having excellent heat insulating properties may be applied.

Accordingly, by the above-described configuration, the cooling member 200 is individually or independently positioned under the battery module 100, so that the heat generated in each battery module 100 may be effectively cooled. In addition, the heat insulating member 250 may prevent the cooling member 200 and the pack frame 410 from directly contacting each other. That is, it is possible to prevent the heat transmitted from the battery module 100 from being directly transmitted to the pack frame 410, and it is possible to prevent the heat generated outside the pack frame 410 from being transmitted to the battery module 100.

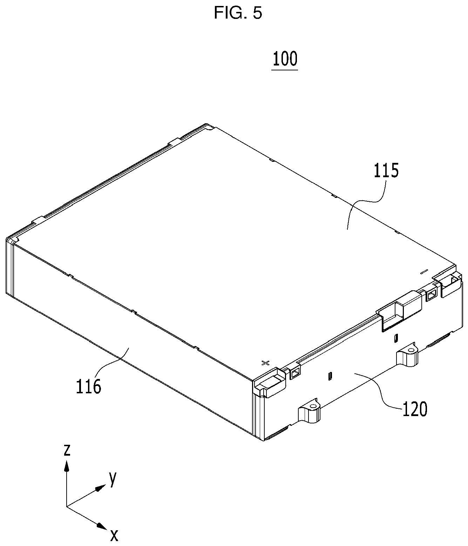

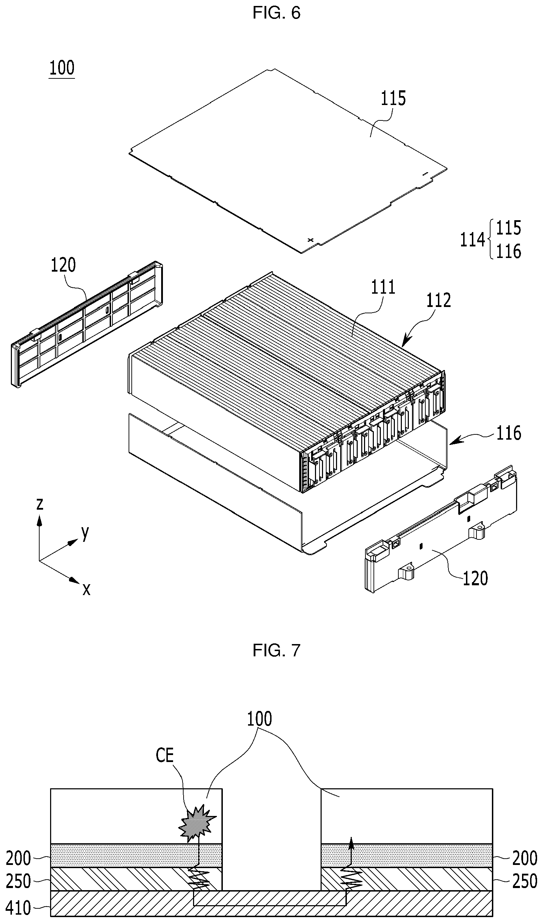

FIG. 5 illustrates a perspective view of a battery module included in the battery pack of FIG. 3. FIG. 6 illustrates an exploded perspective view of the battery module of FIG. 5.

Referring to FIG. 5 and FIG. 6, the plurality of battery modules 100 included in the battery pack 1000 according to the present embodiment accommodate a battery cell stack 112 in which a plurality of battery cells 111 are stacked, and a module frame 114 that accommodates the battery cell stack 112.

The battery cell 111 is preferably a pouch type of battery cell. For example, the battery cell 111 may be manufactured by accommodating the electrode assembly in a pouch case of a laminate sheet including a resin layer and a metal layer, and then thermally fusing a sealing portion of the pouch case. The battery cell 111 may be formed to have a rectangular sheet-like structure. A plurality of the battery cells 111 may be configured, and the plurality of battery cells 111 are stacked to be electrically connected to each other to form the battery cell stack 112.

The module frame 114 may include an upper cover 115 and a U-shaped frame 116. Here, the U-shaped frame 116 may include a bottom portion and two side portions extending upward from both ends of the bottom portion. In this case, the bottom portion may cover a lower surface of the battery cell stack 112, and the side portion may cover a side surface of the battery cell stack 112. The upper cover 115 and the U-shaped frame 116 may be coupled by welding or the like in a state in which corresponding corner portions thereof are in contact to form a structure that covers upper, lower, left, and right sides of the battery cell stack 112. To this end, the upper cover 115 and the U-shaped frame 116 may be made of a metal material having predetermined strength. However, the module frame 114 is not limited thereto, and may be a mono frame in a form of a metal plate in which upper and lower surfaces and both side surfaces are integrated.

Referring to FIG. 3 to FIG. 5, in the battery module 100, the pair of a cooling member 200 and a heat insulating member 250 may be positioned under the module frame 114. In other words, the pair of a cooling member 200 and a heat insulating member 250 may be positioned under the bottom surface of the U-shaped frame 116.

An end plate 120 may be positioned at an opened first side (an x-axis direction) and an opened second side (an opposite direction of the x-axis direction) of the module frame 114 to cover front and rear surfaces of the battery cell stack 120. Accordingly, the end plate 120 may physically protect the battery cell stack 112 and other electrical components from external impact.

Meanwhile although not specifically illustrated, a bus bar frame on which a bus bar is installed and an insulating cover for electrical insulation may be positioned between the battery cell stack 112 and the end plate 120.

Referring to FIG. 3 and FIG. 4, according to another embodiment of the present invention, on either side of the end plate 120 positioned on the front and rear surfaces of the battery cell stack 112, a venting gate 121 that may communicate with the inside of the battery module 100 to emit flame or heat that may be generated from the inside is provided. In the battery pack 1000, the venting gate 121 is disposed to face the outside of the battery pack 1000, and preferably, it may be disposed so as to face the outside toward both ends in the first direction (x-axis direction) in the battery pack 1000 as shown in FIG. 1.

In addition, a venting induction frame 300 disposed along edges of the plurality of battery modules 100 may be further included. More specifically, the plurality of battery modules 100 and the venting induction frame 300 may be installed in the pack frame 410.

For example, at least one rupture portion 500 is formed on one side wall of the pack frame 410, so that heat or flame generated inside may be discharged to the outside. In the present embodiment, it has been exemplified that two rupture portions 500 are formed at only one side of a pair of horizontal beams 320, but the present invention is not limited thereto, and the rupture portion 500 may also be provided on the other horizontal beam 320, or it may be provided on a vertical beam 310, and a position and number thereof may be appropriately selected as needed.

In addition, the venting induction frame 300 may be disposed along the entire edges of the plurality of battery modules 100. The venting induction frame 300 is formed in a tubular shape along each side of the battery pack 1000, and may include a pair of vertical beams 310 and a pair of horizontal beams 320 respectively extending in a first direction (x-axis direction) and a second direction (y-axis direction), which are formed to be able to communicate with each other as a whole.

By the above-described configuration, a passage is formed to communicate as a whole in the venting guide frame 300 of a quadrangular shape formed of the vertical beams 310 and the horizontal beams 320, and the passage communicates with the venting gate 121 and the rupture portion 500 of the battery module 100, so that when thermal runaway occurs from the battery module 100, it is possible to minimize influence on the surrounding battery module by inducing heat and flame to the outside. In this case, the flame included in the generated high-pressure venting gas may all be burned while passing through the internal path of the venting induction frame 300 to be discharged to the outside in a safer state. In addition, the venting induction frame 300 acts as a support frame that stably supports the battery module 100, not during thermal runaway, thereby improving stability of the battery pack 1000.

Hereinafter, when issues such as overvoltage, overcurrent, or overheating occur in some battery modules in the battery pack, a heat propagation path will be described in detail.

FIG. 7 illustrates a schematic cross-section view taken along line A-A' of FIG. 4.

Referring to FIG. 4 and FIG. 7, in the battery pack 1000 of the present embodiment, a cell event CE may occur in some battery modules 100. Here, the cell event CE may mean that an abnormal phenomenon such as overvoltage, overcurrent, or overheating occurs in the battery module 100, and thus the battery module 100 generates a high temperature and gas.

Here, the heat generated in the battery module 100 in which the cell event CE has occurred may be transmitted through a heat energy movement path passing through the pair of a cooling member 200 and a heat insulating member 250 positioned below the battery module 100.

More specifically, the heat generated in the battery module 100 in which the cell event CE has occurred may first be transmitted to the cooling member 200. As described above, the cooling member 200 is individually or independently disposed at the lower portion of each of the battery modules 100, so that the heat transmitted from the battery module 100 to the cooling member 200 is not transmitted to the other adjacent battery module 100. Accordingly, even if the cell event CE occurs in some battery modules 100 among the plurality of battery modules 100, in the present embodiment, it is possible to prevent heat propagation to the adjacent battery modules 100 by the cooling member 200.

In addition, the heat transmitted from the battery module 100 to the cooling member 200 may be transmitted to the heat insulating member 250. Here, the heat insulating member 250 may block some of the heat transmitted from the battery module 100 to the cooling member 200, and may prevent the heat generated from the battery module 100 from being directly transmitted to the pack frame 410. That is, even if the cell event CE occurs in some battery modules 100 among the plurality of battery modules 100 and a relatively large amount of heat energy is generated, heat energy transmitted to the pack frame 410 may be minimized through the heat insulating member 250, and the temperature rise of the adjacent battery module 100 may also be minimized.

In addition, heat transmitted from the heat insulating member 250 of the battery module 100 in which the cell event CE has occurred to the pack frame 410 may be transmitted to the heat insulating member 250 of another adjacent battery module 100. Accordingly, even if some of the heat generated in the battery module 100 in which the cell event CE has occurred is transmitted to another adjacent battery module 100, the heat transmitted from the pack frame 410 may be effectively blocked by the heat insulating member 250.

Accordingly, in the present embodiment having the above-described heat propagation path, even if the cell event CE occurs in some battery modules 100 of the plurality of battery modules 100, it is possible to effectively prevent heat from being propagated to other adjacent battery modules 100, and thereby, a chain thermal runaway phenomenon may also be prevented.

The battery pack described above may be applied to various devices. These devices may be applied to a vehicle such as an electric bicycle, an electric vehicle, or a hybrid vehicle, but the present invention is not limited thereto, and may be applied to various devices that can use a battery module and a battery pack including the same, and this is also included in the scope of the present invention.

While this invention has been described in connection with what is presently considered to be practical embodiments, it is to be understood that the invention is not limited to the disclosed embodiments, but, on the contrary, is intended to cover various modifications and equivalent arrangements included within the spirit and scope of the appended claims.

### [Description of symbols]

100: battery module
200: cooling member
250: heat insulating member
300: venting induction frame
410: pack frame

## Claims

1. A battery pack comprising:
a pack frame in which a plurality of battery modules are installed to be spaced apart from each other; and
a pair of a cooling member and a heat insulating member positioned under the battery module,
wherein the heat insulating member is positioned between the cooling member and a bottom surface of the pack frame, and
pairs of cooling members and heat insulating members respectively positioned under battery modules adjacent to each other among the plurality of battery modules are spaced apart from each other.

2. The battery pack of claim 1, wherein
the pair of a cooling member and a heat insulating member positioned under one of the plurality of battery modules and a pair of a cooling member and a heat insulating member positioned under the other thereof are spaced apart from each other.

3. The battery pack of claim 2, wherein
the pair of a cooling member and a heat insulating member extend along a lower surface of the battery module.

4. The battery pack of claim 3, wherein
the pair of a cooling member and a heat insulating member have a different size from that of a lower surface of the battery module, and have a larger size than that of the lower surface of the battery module.

5. The battery pack of claim 3, wherein
the pair of a cooling member and a heat insulating member have the same size as the lower surface of the battery module.

6. The battery pack of claim 3, wherein
the heat insulating member has a different size from that of the cooling member, and has a larger size than that of the cooling member.

7. The battery pack of claim 3, wherein
the heat insulating member has the same size as the cooling member.

8. The battery pack of claim 1, wherein
the cooling member is made of aluminum (Al).

9. The battery pack of claim 1, wherein
the heat insulating member is made of an expanded polypropylene (EPP) foam.

10. The battery pack of claim 1, wherein
the battery module includes a battery cell stack in which a plurality of battery cells are stacked and a module frame that accommodates the battery cell stack.

11. The battery pack of claim 10, wherein
the pair of a cooling member and a heat insulating member are positioned under the module frame.

12. A device comprising the battery pack according to claim 1.
